# FASCICULE DE BREVET EUROPEEN

(11) **EP 1 305 769 B1**
(45) Date de publication et mention de la délivrance du brevet: **27.08.2008**
(21) Numéro de dépôt: 01951776.2
(22) Date de dépôt: 05.07.2001
(51) Int. Cl.: G06K 19/07, G06K 19/077

(54) **DISPOSITIF ELECTRONIQUE PORTABLE COMPRENANT PLUSIEURS CIRCUITS INTEGRES SANS CONTACT**
TRAGBARE ELEKTRONISCHE SCHALTUNG MIT VERSCHIEDENEN KONTAKTLOSEN IC-SCHALTUNGEN
PORTABLE ELECTRONIC DEVICE COMPRISING SEVERAL CONTACT-FREE INTEGRATED CIRCUITS

(30) Priorité: 28.07.2000 FR 0009997
(43) Date de publication de la demande: 02.05.2003
(73) Titulaire: Inside Contactless, 13856 Aix en Provence Cedex 3 (FR)
(72) Inventeur: SERRA, Didier, F-13240 Septeme Les Vallons (FR)
(74) Mandataire: Marchand, André
(86) Numéro de dépôt international: PCT/FR2001/002149
(87) Numéro de publication internationale: WO 2002/011061

(56) Documents cités:
- EP-A- 0 101 125
- WO-A-97/42578
- US-A- 5 461 385
- US-A- 5 719 586

## Description

La présente invention concerne les circuits intégrés sans contact et les dispositifs électroniques portables réalisés au moyen de tels circuits intégrés.

Ces dernières années, on a développé et mis au point des circuits intégrés dits "sans contact" capables de recevoir ou de transmettre des données par couplage inductif, par l'intermédiaire d'une bobine d'antenne. Des exemples de réalisation de tels circuits intégrés sont décrits dans les demandes WO 98/02840, WO 98/02980, WO 98/05123, WO 98/06057 et WO 98/06056 au nom de la demanderesse. De tels circuits intégrés sont par ailleurs en cours de normalisation et font notamment l'objet du projet de norme ISO 14443, cité ici à titre non limitatif.

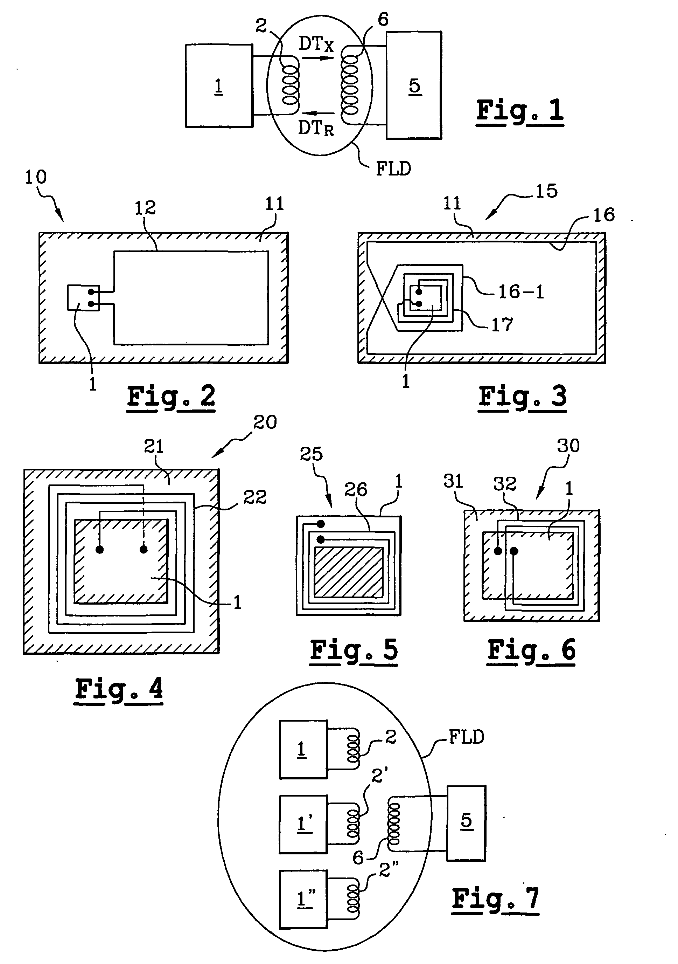

La figure 1 représente très schématiquement un circuit intégré sans contact 1 connecté à une bobine d'antenne 2. Le circuit intégré 1 est actif lorsque la bobine 2 est plongée dans un champ magnétique FLD émis par une station 5 d'émission/réception de données comprenant elle-même, à cet effet, une bobine d'antenne 6. Le champ magnétique FLD émis par la station 5 oscille à une fréquence déterminée, par exemple 13,56 MHz selon la norme ISO 14443. Le plus généralement, la transmission de données DTr dans le sens de la station 5 vers le circuit intégré 1 est assurée par modulation de l'amplitude du signal d'antenne, par exemple avec une profondeur de modulation de 100% (ISO 14443/A) ou de 10% (ISO 14443/B). La transmission de données DTx dans le sens du circuit intégré 1 vers la station 5 est assurée par modulation de la charge de la bobine 2. Le signal de modulation de charge se répercute par couplage inductif dans la bobine 6 de la station 2 où il est filtré et décodé pour l'extraction des données DTx qu'il contient.

De tels circuits intégrés trouvent de nombreuses applications et permettent notamment de réaliser des cartes à puce sans contact, des badges électroniques sans contact, des étiquettes électroniques sans contact, etc..

Selon une idée qui représente en soi un aspect de la présente invention, on souhaite réaliser un dispositif électronique portable comprenant une combinaison de circuits intégrés sans contact.

La présente invention se fonde en effet sur la considération selon laquelle une combinaison de plusieurs circuits intégrés sans contact est susceptible de présenter divers avantages et de trouver diverses applications, ce qui sera démontré dans ce qui suit.

Toutefois, pour être avantageux, un dispositif comprenant plusieurs circuits intégrés sans contact doit présenter un faible encombrement et offrir une distance maximale de communication avec chacun des circuits intégrés qui ne soit pas trop faible. Par "distance maximale de communication", on désigne la distance de communication au-delà de laquelle aucune transmission de données n'est possible, en raison d'un couplage inductif trop faible. Le brevet US 5461385 divulgue un dispositif comportant plusieurs circuit intégrés communiquant au travers d'une antenne commune.

Or, une simple juxtaposition de circuits intégrés sans contact équipés chacun d'une bobine d'antenne ne permet pas de trouver compromis satisfaisant entre un encombrement minimal du dispositif et une distance maximale de communication satisfaisante, en vertu du principe selon lequel la distance maximale de communication augmente proportionnellement avec la taille de la bobine d'antenne. Ainsi, la juxtaposition de plusieurs micromodules de petite taille incorporant un circuit intégré sans contact et une antenne de faibles dimensions conduit à réaliser un dispositif de taille satisfaisante mais dans lequel chaque micromodule offre une distance maximale de communication faible. Inversement, la juxtaposition de plusieurs modules incorporant chacun un circuit intégré sans contact et une antenne de grand diamètre conduit à réaliser un dispositif offrant une distance maximale de communication satisfaisante mais présentant un encombrement important et un prix de revient non négligeable en raison du coût de fabrication de chaque antenne et de la matière première consommée.

Ainsi, la présente invention vise un dispositif comprenant une combinaison de circuits intégrés sans contact qui présente un encombrement réduit tout en offrant une distance maximale de communication satisfaisante. L'invention est définie par la revendication 1.

Cet objectif est atteint par la prévision d'un dispositif comprenant une combinaison d'au moins deux circuits intégrés sans contact, chaque circuit intégré étant connecté à une bobine d'antenne individuelle pour émettre et/ou recevoir des données par couplage inductif, le dispositif comprenant une bobine d'antenne collective de plus grande taille que les bobines d'antenne individuelles des circuits intégrés, et des moyens pour agencer la bobine individuelle d'un circuit intégré à proximité de la bobine collective, au moins lorsque des données doivent être lues et/ou écrites dans le circuit intégré, de manière que la bobine individuelle du circuit intégré soit couplée inductivement à la bobine collective, les circuits intégrés étant agencés ou programmés pour mettre en oeuvre un protocole anticollision permettant à une station d'émission et/ou réception de données de sélectionner un circuit intégré et un seul au cours d'une communication avec le dispositif.

Selon un mode de réalisation, la bobine individuelle de chaque circuit intégré est couplée de façon permanente à la bobine collective.

Selon un mode de réalisation, la bobine collective, les circuits intégrés et les bobines d'antenne individuelles sont agencés sur un support commun, les circuits intégrés et les bobines d'antenne individuelles étant placés au centre de la bobine collective.

Selon un mode de réalisation, la bobine collective est agencée sur un premier support, les circuits intégrés sont agencés sur un ou plusieurs supports différents du premier support, le dispositif comprenant des moyens pour rapprocher le support d'un circuit intégré du support de la bobine collective au moins lorsque des données doivent être lues et/ou écrites dans le circuit intégré.

Selon un mode de réalisation, la bobine collective et les circuits intégrés sont agencés sur des supports sensiblement plats articulés autour d'un axe de manière à former une sorte de carnet.

Selon un mode de réalisation, les supports plats sont des pochettes.

Selon un mode de réalisation, chaque circuit intégré et sa bobine d'antenne individuelle sont réalisés sous la forme d'un micromodule de faibles dimensions.

Selon un mode de réalisation, les circuits intégrés sont agencés ou programmés pour former ensemble un circuit intégré équivalent dont la capacité globale de stockage de données est supérieure à la capacité de stockage individuelle de chacun des circuits intégrés.

Selon un mode de réalisation, chaque circuit intégré comprend dans sa mémoire une donnée représentant le rang du circuit intégré au regard des autres circuits intégrés du dispositif, en vue de l'addition des capacités de stockage de données des circuits intégrés par addition de zones mémoire.

Ces objets, caractéristiques et avantages ainsi que d'autres de la présente invention seront exposés plus en détail dans la description suivante de deux exemples de réalisation d'un dispositif selon l'invention, faite à titre non limitatif en relation avec les figures jointes parmi lesquelles :
- la figure 1 précédemment décrite représente schématiquement un circuit intégré sans contact et une station d'émission/réception de données,
- la figure 2 représente schématiquement une carte à puce sans contact classique d'un premier type,
- la figure 3 représente schématiquement une carte à puce sans contact classique d'un second type,
- la figure 4 représente un micromodule électronique sans contact classique d'un premier type,
- la figure 5 représente un micromodule électronique sans contact classique d'un second type,
- la figure 6 représente un micromodule électronique sans contact classique d'un troisième type,
- la figure 7 représente un agencement classique de circuits intégrés sans contact dans lequel la mise en oeuvre d'un procédé anticollision est nécessaire,
- la figure 8 représente un premier exemple de réalisation d'un dispositif selon l'invention,
- la figure 9 représente par une vue de profil un deuxième exemple de réalisation d'un dispositif selon l'invention,
- la figure 10 est une vue de face du dispositif de la figure 9, et
- la figure 11 est un schéma représentant une architecture classique de circuit intégré sans contact.

### Rappels sur les techniques classiques de réalisation de modules électroniques sans contact

Comme on l'a indiqué au préambule, la simple juxtaposition d'un ensemble de circuits intégrés sans contact équipés chacun d'une bobine d'antenne, ne permet pas de trouver compromis satisfaisant entre un encombrement minimal et une distance satisfaisante de communication avec chacun des circuits intégrés.

Les figures 2 à 6 représentent divers mode de réalisation classiques de modules électroniques sans contact, et illustrent le problème technique que cherche à résoudre l'invention. Les figures 2 et 3 représentent des modules sans contact du type carte à puce présentant une distance maximale de communication étendue, pouvant atteindre plusieurs dizaines de centimètres, mais d'un encombrement non négligeable. Les figures 4 à 6 représentent des micromodules sans contact de faible encombrement, mais offrant une distance maximale de communication réduite, de l'ordre du millimètre à quelques centimètres selon le micromodule considéré.

Dans la présente demande, les valeurs de distance maximale de communication mentionnées n'ont qu'une valeur relative et sont basées sur des constatations expérimentales faites dans des conditions normales de couplage inductif, notamment une puissance consommée par l'antenne d'une station d'émission/réception de données de l'ordre de quelques Watt.

Le module 10 représenté en figure 2 est une carte à puce sans contact ou un badge électronique constitué par un support rectangulaire 11 en matière plastique sur lequel (ou dans lequel) est agencé un circuit intégré sans contact 1 et sa bobine d'antenne 12. La bobine 12 parcourt la périphérie du support 11 en une ou plusieurs spires et offre une distance maximale de communication importante, de l'ordre de la dizaine de centimètre à quelques dizaines de centimètres, voire un à deux mètres avec un lecteur de forte puissance.

La figure 3 représente une variante 15 de la carte sans contact de la figure 2 qui diffère de cette dernière par le fait que le support 11 comprend une bobine d'antenne 16 de grande taille, qui est équivalente à la bobine 12 de la figure 2, et une bobine d'antenne 17 de petite taille. Le circuit intégré 1 et la petite bobine 17 sont agencés au centre de la bobine 16, la bobine 17 étant connectée au circuit intégré 1, tandis que la grande bobine 16 est en boucle fermée, ses deux extrémités étant connectées ensemble. La grande bobine 16 et la petite bobine 17 sont couplées inductivement et la grande bobine 16 forme une sorte de relais amplificateur passif pour la petite bobine 17. Le couplage inductif entre les deux bobines est renforcé en prévoyant une spire 16-1 de la grande bobine 16 qui entoure la petite bobine 17 à une faible distance de celle-ci.

Une carte à puce sans contact réalisée conformément à la figure 3 est réputée moins coûteuse à fabriquer que la carte puce sans contact représentée en figure 2 car il n'y a pas de contact électrique à réaliser entre la grande bobine 16 et le circuit intégré 1 au moment de la fabrication de la carte. Le circuit intégré 1 et la petite bobine 17 peuvent être réalisés sous la forme d'un micromodule intégré, selon des techniques de fabrication collective peu coûteuse à mettre en oeuvre.

Le micromodule 20 de la figure 4 comprend une plaquette support 21 en époxy ou en céramique de dimension inférieure à celle du support plastique décrit plus haut, qui porte un circuit intégré sans contact 1 et une bobine d'antenne 22. La bobine 22 entoure étroitement la plaquette de silicium du circuit intégré 1 et la surface de l'ensemble peut être ramenée à quelques centimètres carrés. L'encombrement du micromodule 20 est nettement inférieur à celui d'une carte à puce mais la distance maximale de communication offerte est plus faible, de l'ordre du centimètre à quelques centimètres.

Le micromodule 25 de la figure 5 est réalisé selon la technique dite "coil on chip" ("bobine sur puce") et est exclusivement constitué par la plaquette de silicium du circuit intégré 1, une bobine 26 étant directement formée sur la plaquette de silicium par dépôt de métal. La zone active de la plaquette, qui comprend les composants électroniques du circuit intégré, est représentée par une zone hachurée. Cette zone active peut être agencée au centre de la bobine 26, comme représenté, ou être entièrement recouverte par la bobine 26. Ce type de micromodule représente à l'heure actuelle le plus haut degré d'intégration d'un circuit intégré sans contact et de sa bobine associée mais offre une distance maximale de communication très faible, de l'ordre du millimètre à quelques millimètres.

Le micromodule 30 représenté en figure 6, décrit dans la demande internationale WO 00/01013 au nom de la demanderesse, constitue un compromis entre les deux micromodules précédents. Le micromodule 30 comprend une plaquette support 31, par exemple en silicium, sur laquelle est agencé le circuit intégré sans contact 1. Le circuit intégré 1 est enterré dans une couche isolante (non visible sur la figure), par exemple en polyimide, sur laquelle est agencée une bobine 32, des ouvertures étant réalisées dans la couche isolante pour assurer un contact électrique entre le circuit intégré et la bobine. Un tel micromodule 30 présente un encombrement supérieur à celui de la figure 5 mais nettement inférieur à celui de la figure 4. Comme le support 31 offre une surface d'agencement de bobine qui est supérieure à celle de la plaquette du circuit intégré 1, la taille de la bobine 32 peut être choisie plus importante et la distance maximale de communication obtenue peut être de l'ordre de celle du micromodule de la figure 4, pour un encombrement plus faible.

En définitive, la juxtaposition de modules du type représenté en figures 2 et 3 conduit à réaliser un dispositif offrant une distance maximale de communication importante mais présentant un encombrement et un prix de revient élevés. Inversement, la juxtaposition de micromodules du type représenté en figures 4 à 6 conduit à réaliser un dispositif de faible encombrement mais offrant une distance maximale de communication faible.

### Aspects généraux de l'invention

La présente invention repose sur l'idée simple mais non moins inventive selon laquelle la technique d'amplification du couplage inductif au moyen d'une bobine d'antenne agencée en boucle fermée, telle qu'illustrée sur la figure 3, est applicable à la réalisation d'un dispositif comprenant plusieurs circuits intégrés et leur bobines d'antennes individuelles, la bobine passive amplificatrice étant dans ce cas utilisée en tant qu'antenne collective. Si l'on observe la figure 3, on voit en effet qu'il existe au centre de la bobine une place importante pouvant être utilisée pour recevoir d'autres circuits intégrés et leurs bobines individuelles.

Une autre idée de la présente invention, allant de pair avec la première, est de prévoir dans chaque circuit intégré des moyens de gestion des collisions entre messages. De telles collisions se produiront inévitablement puisque des circuits intégrés sans contact partageant la même bobine d'antenne collective vont se trouver simultanément activé par le champ magnétique émis par une station d'émission/réception de données.

Or, les procédés de gestion de collisions sont en soi classiques dans le domaine des étiquettes électroniques sans contact et peuvent être appliqués à la présente invention. Pour mémoire, la figure 7 illustre un cas de collision classique entre trois circuits intégrés sans contact 1, 1', 1" pourvus chacun d'une bobine d'antenne 2, 2', 2" et se trouvant simultanément dans le champ d'interrogation FLD émis par une station d'émission et/ou réception de données 5. Un circuit intégré et un seul doit être sélectionné par la station 5 et les autres doivent être mis en sommeil pendant la durée de la communication. A cet effet, divers procédé dits "anticollision" peuvent être utilisés, notamment celui qui est décrit par la norme ISO 14443 ou dans la demande internationale WO 97/42578 au nom de la demanderesse. Ce procédé anticollision consiste par exemple à envoyer un message d'interrogation générale aux circuits intégrés, et à sélectionner le circuit intégré ayant répondu le premier. Les circuits intégrés sont agencés pour, sur réception d'un message d'interrogation, déterminer une position aléatoire de réponse sur une échelle temporelle de réponse, envoyer un message de réponse quand la position de réponse est atteinte ou se placer dans un état de veille quand un message est reçu avant que la position de réponse ne soit atteinte.

### Exemples de réalisation de dispositifs selon l'invention

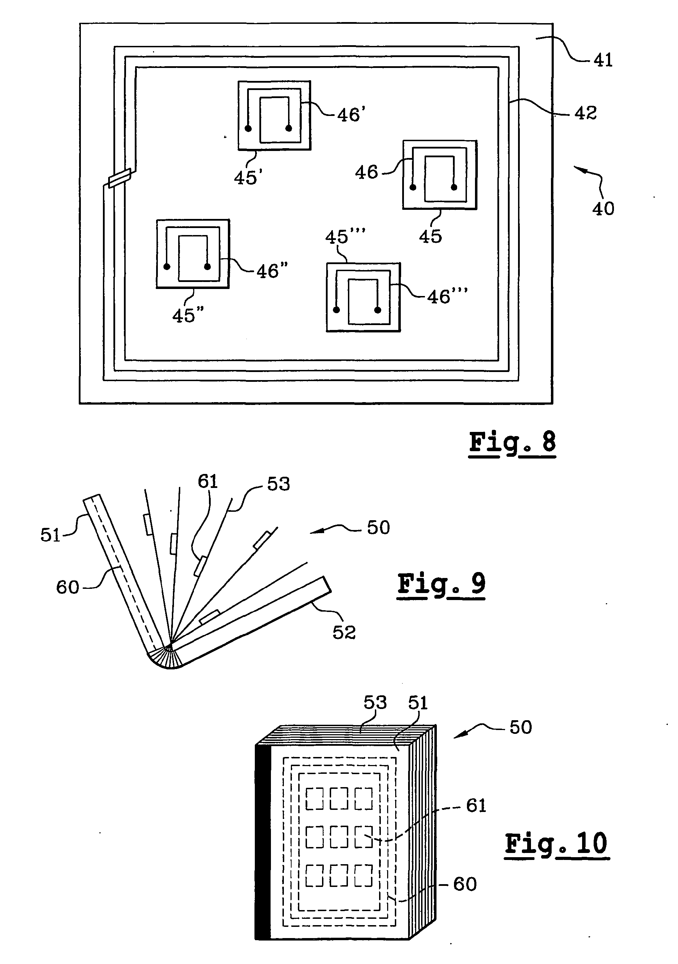

La figure 8 représente un dispositif selon l'invention 40, comprenant un support 41 sur lequel est agencée (ou dans lequel est incorporée) une bobine collective 42 agencée en boucle fermée. Le support 41 est par exemple en matière plastique, en époxy ou en céramique, et la bobine collective 42 est réalisée en cuivre, en aluminium ou au moyen d'une encre conductrice.

Divers micromodules sans contact, ici quatre micromodules 45, 45', 45", 45"', sont agencés au centre de la bobine collective 42. Le "centre de la bobine collective" est une aire qui est délimitée par l'enroulement de plus faible diamètre de la bobine collective. Les micromodules 45, représentés schématiquement, comportent chacun un circuit intégré sans contact et une bobine d'antenne individuelle 46, 46', 46", 46"' de petite taille. Les micromodules sont réalisés selon toute technique de fabrication connue, notamment l'une des techniques précédemment décrites en relation avec les figures 4, 5 et 6. Ainsi, par exemple, un micromodule 45 réalisé conformément au micromodule 25 de la figure 5 est une simple puce de silicium sur laquelle a été préalablement formée une bobine. Chaque micromodule 45 met en oeuvre un protocole de transmission de données incorporant un procédé anticollision du type décrit plus haut.

La bobine d'antenne 46 de chaque micromodule 45 est couplée inductivement à la bobine collective 42 du fait de l'agencement des micromodules au centre de la bobine collective 42. La distance maximale de communication avec chaque micromodule 45 est satisfaisante et est de l'ordre de dix fois la distance maximale de communication que présenterait chaque micromodule en l'absence de la bobine collective 42.

Le dispositif 40 est bien entendu susceptible de diverses variantes, notamment en ce qui concerne la forme du support et celle de l'antenne collective, ainsi que leurs matériaux constitutifs. En particulier, la bobine collective 42 peut présenter en son centre divers enroulements de faible diamètre venant entourer les micromodules 45, à l'image de l'enroulement 16-1 représenté en figure 3.

Le dispositif 40 est également susceptible de diverses applications. Dans une application, le dispositif 40 est utilisé en tant qu'étiquette électronique pour l'identification de marchandises, chaque circuit intégré étant affecté au stockage d'informations d'un type déterminé. En supposant que le dispositif soit agencé sur un conteneur de marchandises, le premier micromodule 46 est par exemple utilisé pour stocker des informations relatives au conteneur lui-même, comme sa date de mise en service, l'identité du propriétaire, la date limite d'utilisation du conteneur (date à laquelle il doit être recyclé), son poids à vide, son poids maximum en charge, etc.. Le second micromodule 46' est par exemple utilisé pour stocker des informations relatives au transport du conteneur, notamment le lieu d'origine du container, sa destination finale, les pays de transit, etc.. Le troisième micromodule 46" est par exemple utilisé pour stocker des informations relatives aux marchandises que contient le conteneur, notamment leur nature, leur nombre, l'identité des destinataires des marchandises sur le lieu d'arrivée du container, le cas échéant les conditions spéciales de conservation des marchandises (température, humidité). Enfin, le quatrième micromodule 46"' est par exemple utilisé pour stocker des informations concernant les douanes, notamment la valeur des marchandises stockées dans le conteneur, le coût unitaire de chaque marchandise, etc..

Dans une autre application, la combinaison des circuits intégrés sans contact est utilisée pour cumuler les capacités de stockage de données offertes par chacun des circuits intégrés, la capacité de stockage d'un circuit intégré sans contact de la production courante étant généralement assez faible. Par exemple, chaque circuit intégré comprend dans une zone de sa mémoire une valeur représentant le rang "i" du circuit intégré relativement aux autres circuits intégrés de la combinaison. Chaque circuit intégré offre une zone mémoire MEMᵢ pour stocker des données, dans laquelle "i" est le rang attribué au circuit intégré. L'ensemble des circuits intégrés constitue ainsi une mémoire globale MEM comprenant la somme des zones mémoires de rang croissant MEM1, MEM2, MEM3, MEM4 de chacun des circuits intégrés. La mémoire globale peut être utilisée par une station d'émission/réception de données pour lire ou enregistrer des données de grande longueur. Ce mode de réalisation concerne aussi bien le domaine des cartes à puce que celui des badges électronique ou celui des étiquettes électroniques.

Dans encore une autre application, on souhaite stocker dans un même dispositif des données médicales (carnet de santé électronique), des données relatives à l'état civil d'une personne (carte d'identité électronique), des données relatives à la situation de famille d'une personne (carnet de famille électronique), des données relatives aux autorisations de conduire des véhicule à moteur (permis de conduire électronique), etc..

Un dispositif 50 selon l'invention, prévu pour une telle application, est illustré sur les figures 9 et 10. Le dispositif 50 a l'aspect d'un carnet comprenant une couverture 51 et un dos 52 en carton ou en matière plastique, et des "pages" 53. La couverture 51 (ou le dos 52) incorpore une antenne collective 60 et chaque page reçoit ou peut recevoir un ou plusieurs micromodules électroniques sans contact 61 du type décrit plus haut. Dans un mode de réalisation, chaque page est une pochette fine formée par deux feuilles plastiques, pourvue d'une fente ou de plusieurs fentes d'introduction d'un ou plusieurs micromodules 61. Chaque micromodule 61 prend la forme d'une carte plastique de faibles dimensions incorporant un circuit intégré sans contact et une bobine d'antenne individuelle. Dans un autre mode de réalisation, chaque micromodule 61 prend la forme d'une puce de silicium avec bobine intégrée ("coil on chip") fixé sur une feuille plastique agencée dans un carnet à anneaux, à spirales ou à reliure.

Lorsque le carnet 50 est refermé, comme illustré en figure 10, chaque micromodule 61 se retrouve agencé selon un axe passant par la partie centrale de la bobine collective 51, c'est-à-dire la partie délimitée extérieurement par la spire de plus faible diamètre de la bobine collective. Chaque micromodule 61 peut ainsi être lu et/ou écrit au moyen d'un lecteur d'étiquette électronique classique compatible avec le protocole anticollision mis en oeuvre par les micromodules, en passant le lecteur devant la couverture 51.

Diverses autres variantes de réalisation et applications d'un dispositif selon l'invention peuvent bien entendu être prévues par l'homme de l'art.

Pour compléter la description qui précède, on décrira ci-après un exemple d'architecture classique de circuit intégré pouvant être utilisé pour mettre en oeuvre la présente invention.

### Exemple d'architecture classique de circuit intégré sans contact

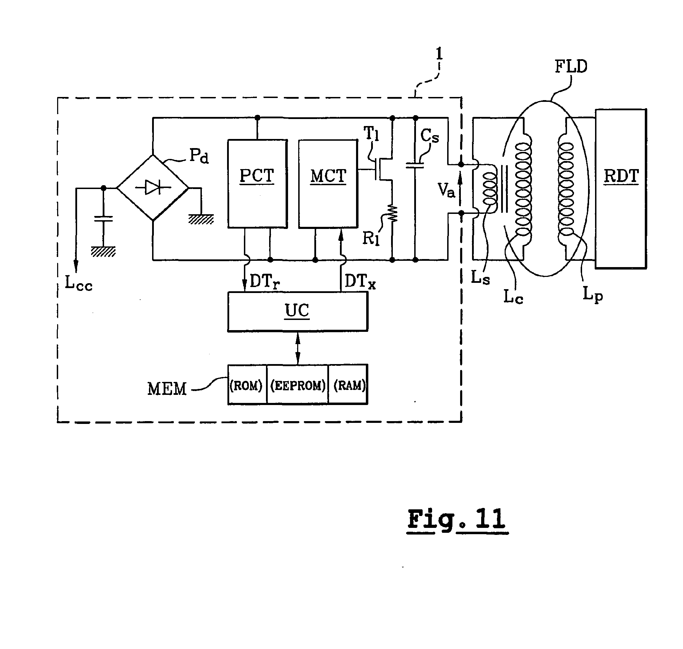

La figure 11 représente un exemple classique d'architecture de circuit intégré 1 fonctionnant sans contact 1, connecté à une bobine d'antenne individuelle Ls qui est elle-même couplée à une bobine d'antenne collective Lc selon l'invention. Le circuit intégré 1 comprend une capacité interne Cs formant avec la bobine d'antenne individuelle Ls un circuit d'antenne résonnant de type LC, ainsi qu'un pont redresseur Pd à diodes, un circuit de démodulation DCT connecté aux bornes du circuit d'antenne LsCs, un circuit de modulation de charge MCT, une unité centrale UC à logique câblée ou à microprocesseur, et un plan mémoire MEM. Le plan mémoire MEM comprend une mémoire morte (ROM), une mémoire programmable et effaçable électriquement (EEPROM) et une mémoire vive (RAM). Le circuit de modulation de charge MCT pilote un transistor de modulation de charge Tl qui est connecté aux bornes de la bobine Ls par l'intermédiaire d'une résistance de charge Rl.

Lorsque la bobine Ls se trouve dans le champ magnétique FLD émis par la bobine Lp d'un lecteur d'étiquette RDT (ou station d'émission/réception de données), par exemple un champ magnétique oscillant à 13,56 MHz, une tension alternative induite Va amplifiée par la présence de l'antenne collective Lc apparaît aux bornes de la bobine Ls. La tension Va est redressée par le pont à diodes Pd dont la sortie délivre une tension d'alimentation Vcc du circuit intégré. La transmission de données dans le sens du lecteur RDT vers le circuit intégré 1 est assurée par une modulation de l'amplitude du champ magnétique FLD émis par le lecteur. La tension induite Va est démodulée par le circuit DCT qui délivre les données reçues DTr à l'unité centrale UC. La transmission de données dans le sens du circuit intégré 1 vers le lecteur RDT est assurée par modulation de la charge de la bobine d'antenne Ls, qui se répercute sur la bobine d'antenne Lp du lecteur RDT. Cette modulation de charge est assurée le circuit modulateur MCT, qui applique au transistor Tl un signal de modulation de charge qui est fonction des données DTx à transmettre, fournies par l'unité centrale UC.

Lorsque le circuit intégré est activé par le champ FLD après avoir été en sommeil, l'unité centrale UC commence par exécuter les étapes du procédé anticollision choisi. Par exemple, l'unité centrale UC attend la réception d'un message d'activation générale et détermine sur réception de ce message un temps aléatoire d'envoi d'une réponse. Si un message est reçu avant que le temps aléatoire ne soit écoulé, l'unité centrale se place en mode veille dans l'attente d'un autre message d'activation générale.

## Revendications

1. Dispositif (40, 50) comprenant une combinaison d'au moins deux circuits intégrés sans contact (1, 45, 61), chaque circuit intégré étant connecté à une bobine d'antenne individuelle (46, Ls) pour émettre et/ou recevoir des données par couplage inductif, **caractérisé en ce qu'**il comprend une bobine d'antenne collective (42, 60, Lc) de plus grande taille que les bobines d'antenne individuelles des circuits intégrés, et des moyens (41, 51, 53) pour agencer la bobine individuelle d'un circuit intégré à proximité de la bobine collective, au moins lorsque des données doivent être lues et/ou écrites dans le circuit intégré, de manière que la bobine individuelle du circuit intégré soit couplée inductivement à la bobine collective, les circuits intégrés (1, 45, 61) étant agencés ou programmés pour mettre en oeuvre un protocole anticollision permettant à une station d'émission et/ou réception de données de sélectionner un circuit intégré et un seul au cours d'une communication avec le dispositif.

2. Dispositif (40) selon la revendication 1, **caractérisé en ce que** la bobine individuelle (46) de chaque circuit intégré (45) est couplée de façon permanente à la bobine collective (42).

3. Dispositif selon la revendication 2, **caractérisé en ce que** la bobine collective (42), les circuits intégrés (45) et les bobines d'antenne individuelles (46) sont agencés sur un support commun (41), les circuits intégrés et les bobines d'antenne individuelles étant placés au centre de la bobine collective (42).

4. Dispositif (50) selon la revendication 1, **caractérisé en ce que** la bobine collective (60) est agencée sur un premier support (51), les circuits intégrés (61) sont agencés sur un ou plusieurs support (53) différents du premier support, le dispositif comprenant des moyens pour rapprocher le support (53) d'un circuit intégré du support (51) de la bobine collective (60) au moins lorsque des données doivent être lues et/ou écrites dans le circuit intégré.

5. Dispositif selon la revendication 4, **caractérisé en ce que** la bobine collective (60) et les circuits intégrés (61) sont agencés sur des supports sensiblement plats (51, 53) articulés autour d'un axe de manière à former une sorte de carnet (50).

6. Dispositif selon la revendication 5, dans lequel les supports plats sont des pochettes (53).

7. Dispositif selon l'une des revendications 1 à 6, **caractérisé en ce que** chaque circuit intégré et sa bobine d'antenne individuelle sont réalisés sous la forme d'un micromodule de faibles dimensions (20, 25, 30, 45).

8. Dispositif (40) selon l'une des revendications 1 à 7, **caractérisé en ce que** les circuits intégrés (45) sont agencés ou programmés pour former ensemble un circuit intégré équivalent dont la capacité globale de stockage de données est supérieure à la capacité de stockage individuelle de chacun des circuits intégrés.

9. Dispositif selon la revendication 8, **caractérisé en ce que** chaque circuit intégré (45) comprend dans sa mémoire (MEM) une donnée représentant le rang ("i") du circuit intégré au regard des autres circuits intégrés du dispositif, en vue de l'addition des capacités de stockage de données des circuits intégrés par addition de zones mémoire (MEMi).

## Claims

1. Device (40, 50) comprising a combination of at least two contactless integrated circuits (1, 45, 61), each integrated circuit being connected to an individual antenna coil (46, Ls) to transmit and/or receive data by inductive coupling, **characterized in that** it comprises a common antenna coil (42, 60, Lc) which is larger than the individual antenna coils for the integrated circuits, and means (41, 51, 53) for arranging the individual coil of an integrated circuit close to the common coil, at least when the data is to be read and/or written in the integrated circuit, in such a way that the individual coil of the integrated circuit is coupled inductively to the common coil, the integrated circuits (1, 45, 61) being arranged or programmed to implement an anti-collision protocol enabling a data transmission and/or reception station to select one integrated circuit and one only during the course of a communication with the device.

2. Device (40) in accordance with claim 1, **characterized in that** the individual coil (46) for each integrated circuit (45) is coupled permanently to the common coil (42).

3. Device in accordance with claim 2, **characterized in that** the common coil (42), the integrated circuits (45) and the individual antenna coils (46) are arranged on a common support (41), the integrated circuits and the individual antenna coils being placed in the centre of the common coil (42).

4. Device (50) in accordance with claim 1, **characterized in that** the common coil (60) is arranged on a first support (51), the integrated circuits (61) are arranged on one or more supports (53) other than the first support, the device comprising means for bringing the support (53) for an integrated circuit closer to the support (51) for the common coil (60) at least when the data is to be read and/or written in the integrated circuit.

5. Device in accordance with claim 4, **characterized in that** the common coil (60) and the integrated circuits (61) are arranged on substantially flat supports (51, 53) hinged around an axis so as to form a sort of booklet (50).

6. Device in accordance with claim 5, in which the flat supports are pockets (53).

7. Device in accordance with any of the claims 1 to 6, **characterized in that** each integrated circuit and its individual antenna coil is made in the form of a micromodule of small dimensions (20, 25, 30, 45).

8. Device (40) in accordance with any of the claims 1 to 7, **characterized in that** the integrated circuits (45) are arranged or programmed to form together an equivalent integrated circuit for which the overall data storage capacity is greater than the individual storage capacity of each of the integrated circuits.

9. Device in accordance with claim 8, **characterized in that** each integrated circuit (45) has in its memory (MEM) an item of data representing the rank ("i") of the integrated circuit from the point of view of the other integrated circuits in the device, for adding the data storage capacities for the integrated circuits by addition of memory zones (MEMi).

## Patentansprüche

1. Vorrichtung (40, 50), umfassend eine Kombination aus mindestens zwei kontaktlosen integrierten Schaltungen (1, 45, 61), wobei jede integrierte Schaltung mit einer individuellen Antennenspule (46, Ls) verbunden ist, um Daten über induktive Kopplung zu senden und/oder zu empfangen, **dadurch gekennzeichnet, dass** sie eine kollektive Antennenspule (42, 60, Lc), die größer als die individuellen Antennenspulen der integrierten Schaltungen ist, und Mittel (41, 51, 53) zum Anordnen der individuellen Spule einer integrierten Schaltung in der Nähe der kollektiven Spule zumindest dann, wenn Daten in der integrierten Schaltung gelesen und/oder geschrieben werden müssen, sodass die individuelle Spule der integrierten Schaltung induktiv mit der kollektiven Spule gekoppelt ist, umfasst, wobei die integrierten Schaltungen (1, 45, 61) angeordnet oder programmiert sind, um ein Antikollisions-Protokoll umzusetzen, das es einer Station zum Senden und/oder Empfangen von Daten ermöglicht, im Zuge einer Kommunikation mit der Vorrichtung eine, und nur eine, integrierte Schaltung auszuwählen.

2. Vorrichtung (40) nach Anspruch 1, **dadurch gekennzeichnet, dass** die individuelle Spule (46) einer jeden integrierten Schaltung (45) auf dauerhafte Weise mit der kollektiven Spule (42) gekoppelt ist.

3. Vorrichtung nach Anspruch 2, **dadurch gekennzeichnet, dass** die kollektive Spule (42), die integrierten Schaltungen (45) und die individuellen Antennenspulen (46) auf einem gemeinsamen Träger (41) angeordnet sind, wobei die integrierten Schaltungen und die individuellen Antennenspulen im Zentrum der kollektiven Spule (42) angeordnet sind.

4. Vorrichtung (50) nach Anspruch 1, **dadurch gekennzeichnet, dass** die kollektive Spule (60) auf einem ersten Träger (51) angeordnet ist und die integrierten Schaltungen (61) auf einem oder mehreren anderen Trägern (53) als der erste Träger angeordnet sind, wobei die Vorrichtung Mittel zum Annähern des Trägers (53) einer integrierten Schaltung an den Träger (51) der kollektiven Spule (60) zumindest dann, wenn Daten in der integrierten Schaltung gelesen und/oder geschrieben werden müssen, umfasst.

5. Vorrichtung nach Anspruch 4, **dadurch gekennzeichnet, dass** die kollektive Spule (60) und die integrierten Schaltungen (61) auf im Wesentlichen flachen Trägern (51, 53) angeordnet sind, die um eine Achse herum angeordnet sind, um eine Art Heft (50) zu bilden.

6. Vorrichtung nach Anspruch 5, wobei die flachen Träger Hüllen (53) sind.

7. Vorrichtung nach einem der Ansprüche 1 bis 6, **dadurch gekennzeichnet, dass** jede integrierte Schaltung und ihre individuelle Antennenspule in Form eines Mikromoduls mit kleinen Abmessungen (20, 25, 30, 45) ausgestaltet sind.

8. Vorrichtung (40) nach einem der Ansprüche 1 bis 7, **dadurch gekennzeichnet, dass** die integrierten Schaltungen (45) angeordnet oder programmiert sind, um gemeinsam eine integrierte Ersatzschaltung zu bilden, deren gesamte Datenspeicherkapazität größer ist als die individuelle Speicherkapazität der einzelnen integrierten Schaltungen.

9. Vorrichtung nach Anspruch 8, **dadurch gekennzeichnet, dass** jede integrierte Schaltung (45) in ihrem Speicher (MEM) Daten umfasst, die die Rangordnung ("i") der integrierten Schaltung im Verhältnis zu den anderen integrierten Schaltungen der Vorrichtung darstellen, im Hinblick auf die Addition der Datenspeicherkapazitäten der integrierten Schaltungen durch Addieren von Speicherzonen (MEMi).
